## Europäisches Patentamt
## European Patent Office
## Office européen des brevets

(11) Veröffentlichungsnummer: **0 046 221**
**B1**

(12) ## EUROPÄISCHE PATENTSCHRIFT

(45) Veröffentlichungstag der Patentschrift:
17.04.85

(51) Int. Cl.⁴: **H 02 J 3/18, G 05 F 1/70**

(21) Anmeldenummer: **81105959.1**

(22) Anmeldetag: **29.07.81**

(54) **Thyristorgesteilte Schaltungsanordnung zur schnellen Blindleistungskompensation.**

(30) Priorität: **14.08.80 DE 3030784**

(43) Veröffentlichungstag der Anmeldung:
**24.02.82 Patentblatt 82/8**

(45) Bekanntmachung des Hinweises auf die Patenterteilung:
**17.04.85 Patentblatt 85/16**

(84) Benannte Vertragsstaaten:
**BE CH FR GB LI SE**

(56) Entgegenhaltungen:
**EP - A - 0 037 027**
**GB - A - 1 230 830**
**US - A - 3 184 675**
**US - A - 3 579 088**

(73) Patentinhaber: **Tuttas, Christian, Luitpoldstrasse 22 a,
D-6748 Bad Bergzabern (DE)**

(72) Erfinder: **Tuttas, Christian, Luitpoldstrasse 22 a,
D-6748 Bad Bergzabern (DE)**

BUNDESDRUCKEREI BERLIN

## Beschreibung

Die Erfindung bezieht sich auf eine thyristorgestellte Schaltungsanordnung zur schnellen Blindleistungskompensation.

Bei Anordnungen zur schnellen Blindleistungskompensation ist es bekannt, einen Parallelschwingkreis zu verwenden, welcher aus einer festen Kondensator- oder Filterbatterie und einer in ihrer Induktivität veränderbaren Drosselspule besteht. Die in ihrer Induktivität veränderbare Drosselspule kann nach der gemäß Artikel 54(3) EPÜ zum Stand der Technik gehörenden Europäischen Anmeldung 81 102 084.1 (veröffentlicht durch EP-A1-37 027) aus zwei in Reihe geschalteten nichtlinearen Drosselspulen (Sättigungsdrosseln) bestehen, von denen eine mit einem Thyristorsteller parallel geschaltet ist, der aus zwei antiparallel geschalteten und phasenanschnittgesteuerten Thyristoren besteht.

Bei hohen Spannungen ist es oft zweckmäßig, die Kondensatorbatterie nicht direkt, sondern über einen Anpaßtransformator an das Netz zu schalten. Der Erfindung liegt die Aufgabe zugrunde, eine Schaltungsanordnung zu schaffen, in der die in ihrer Induktivität veränderbare Drosselspule gleichzeitig zur Anpassung des Kompensationskondensators dient. Dabei wird von der in der EP-A1-37 027 angegebenen Drosselschaltung ausgegangen (Artikel 54(3) EPÜ).

Die Aufgabe wird erfindungsgemäß mit einer Schaltungsanordnung gemäß Anspruch 1 dadurch gelöst, daß die beiden Sättigungsdrosselspulen mit in Reihe geschalteten Sekundärwicklungen versehen werden, die zur transformatorischen Anpassung der Kondensatorbatterie dienen.

Eine zweite Lösung der Aufgabe verwendet eine einzige Sättigungsdrosselspule mit einem Spalteisenkern gemäß den Merkmalen des Anspruchs 6.

Zweckmäßige Weiterbildungen der Erfindung sind den abhängigen Ansprüchen zu entnehmen.

Die durch die Erfindung erzielten Vorteile bestehen insbesondere darin, daß auf einen zusätzlichen Anpaßtransformator für die Kondensatorbatterie verzichtet werden kann.

Die Erfindung wird nachstehend anhand von in der Zeichnung schematisch dargestellten Ausführungsbeispielen erläutert.

Es zeigt

Fig. 1 eine grundsätzliche Ausbildung der erfindungsgemäßen Schaltungsanordnung mit Thyristorsteller in einphasiger Ausführung,

Fig. 2 eine abweichende Ausbildung der erfindungsgemäßen Schaltungsanordnung,

Fig. 3 eine andere Ausbildung der Schaltungsanordnung,

Fig. 4 eine weitere Ausbildung der Schaltungsanordnung,

Fig. 5 eine weitere Ausbildung der Schaltungsanordnung,

Fig. 6 eine thyristorgestellte Schaltungsanordnung mit einer Sättigungsdrosselspule auf einem Spalteisenkern.

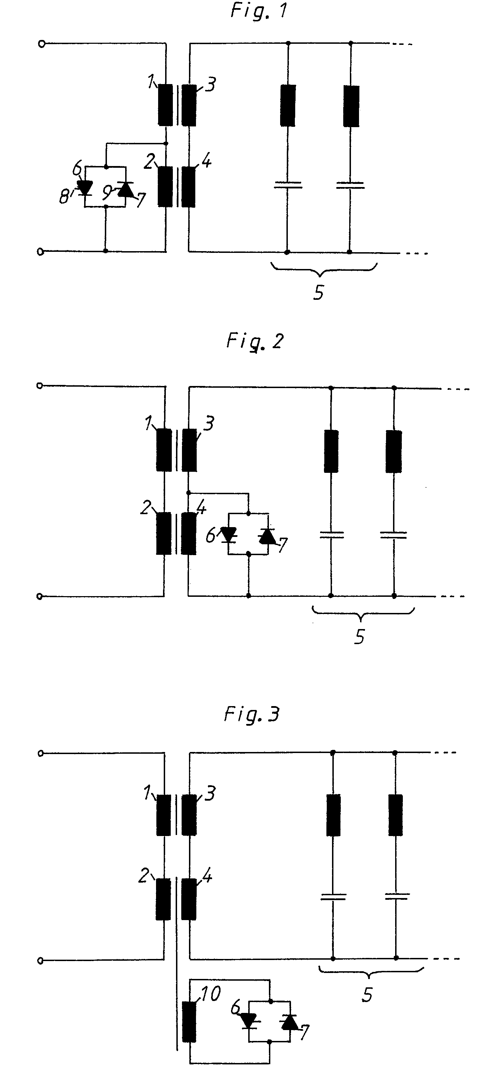

Die Ausbildung nach Fig. 1 besteht aus zwei in Reihe geschalteten Sättigungsdrosselspulen 1, 2. Parallel zur Sättigungsdrosselspule 2 liegt ein an sich bekannter Thyristorsteller, der aus den antiparallelen Thyristoren 6, 7 besteht, welche über ihre Gates 8, 9 gezündet werden (Phasenanschnittsteuerung). Die bislang beschriebene Anordnung und ihre Wirkungsweise gehören durch die EP-A1-37 027 zum Stand der Technik. Im Gegensatz zu diesem Dokument sind die Sättigungsdrosselspulen 1, 2 in Fig. 1 zusätzlich mit in Reihe geschalteten Sekundärwicklungen 3, 4 versehen, die zur transformatorischen Ankopplung des kapazitiven Kompensatorteiles 5 dienen.

Der Thyristorsteller 6, 7 kann auch parallel zur Sekundärwicklung 4 der Sättigungsdrosselspule 2 angeordnet sein, wie der Fig. 2 zu entnehmen ist.

Bei der Ausbildung nach der Fig. 3 ist der Thyristorsteller 6, 7 an einer Tertiärwicklung 10 der Sättigungsdrosselspule 2 angeschlossen.

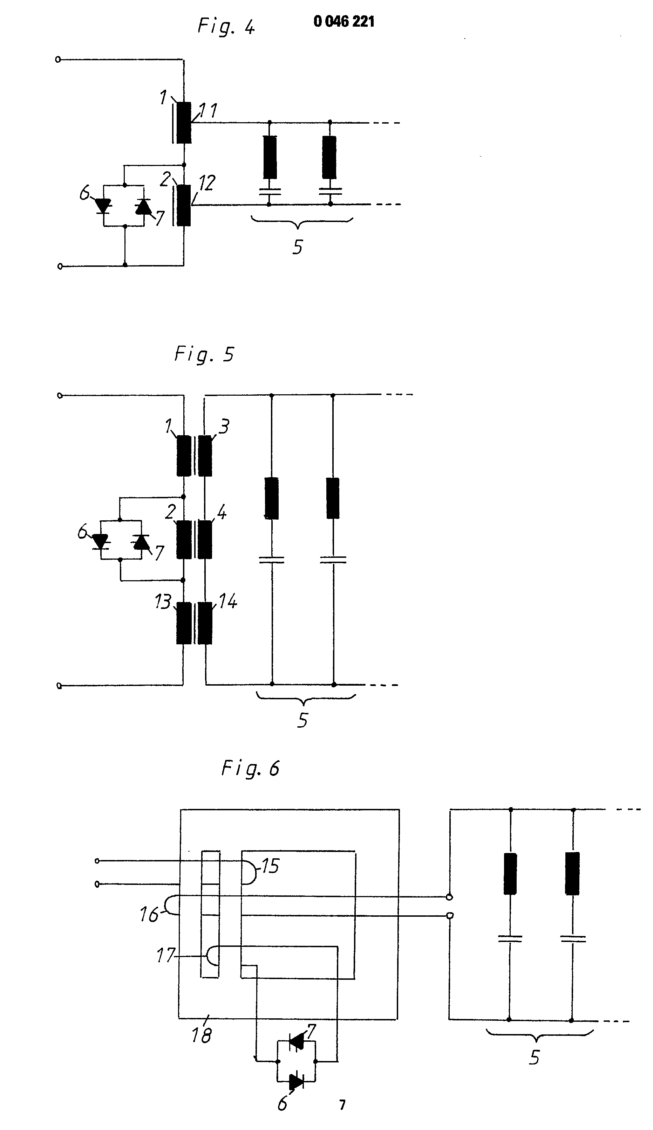

Bei der Ausbildung nach der Fig. 4 sind die Sekundärwicklungen 3, 4 durch sekundärseitige Anzapfungen 11, 12 ersetzt.

Mit den Sättigungsdrosselspulen 1, 2 können weitere Sättigungsdrosseln in Reihe geschaltet werden. Bei der Ausbildung nach Fig. 5 ist zusätzlich zu den Drosseln 1 und 2 eine Drossel 13 in Reihe geschaltet.

Die Sekundärwicklungen 3, 4 und 14 liegen ebenfalls in Reihe.

Wie aus Fig. 6 ersichtlich, ist die Schaltungsanordnung auch mit einer einzigen Sättigungsdrosselspule 15 realisierbar, indem ein Spalteisenkern 18 verwendet ist. Die Sättigungsdrosselspule 15 sowie die Sekundärwicklung 16 umfassen den gesamten Spaltkern. Der Thyristorsteller 6, 7 ist parallel zu einer Tertiärwicklung 17 geschaltet, die nur einen Teil des Spalteisenkernes umfaßt. Durch Kurzschließen der Wicklung 17 mittels des Thyristorstellers 6, 7 erhöht sich der magnetische Widerstand des Eisenkernes 18, wodurch dieser in die Sättigung geht. Eine ähnliche Schaltungsanordnung ist von den Ferroresonanz-Transformatoren her bekannt (US-A-3 579 088). Die Schaltungsanordnung nach Fig. 6 benötigt jedoch keine zusätzlichen Luftspalte im Eisenkern, wie sie bei den Ferroresonanz-Transformatoren vorgesehen sind.

Die thyristorgestellte Schaltungsanordnung zur schnellen Blindleistungskompensation, die bislang nur in ihrer einphasigen Ausführung betrachtet wurde, ist sinngemäß auch als Dreiphaseneinheit ausbildbar.

## Patentansprüche

1. Thyristorgestellte Schaltungsanordnung zur schnellen Blindleistungskompensation, dadurch gekennzeichnet,

— daß zwei Sättigungsdrosselspulen (1, 2), die einen induktiven Spannungsteiler bilden, zusätzlich mit in Reihe geschalteten Sekundärwicklungen (3, 4) versehen sind,

— daß die Sekundärwicklungen mit einer Kondensator- oder Filterbatterie (5) belastet sind

— und daß eine Steuerung des kapazitiven Laststromes durch einen Thyristorsteller (6, 7) möglich ist, der parallel zu einer Sättigungsdrosselspule (2) liegt.

2. Schaltungsanordnung nach Anspruch 1, dadurch gekennzeichnet, daß der Thyristorsteller (6, 7) auf der Sekundärseite einer der Sättigungsdrosselspulen (2) angeordnet ist (Fig. 2).

3. Schaltungsanordnung nach Anspruch 1 und 2, dadurch gekennzeichnet, daß der Thyristorsteller (6, 7) einer Tertiärwicklung (10) einer der Sättigungsdrosselspulen (2) zugeordnet ist (Fig. 3).

4. Schaltungsanordnung nach Anspruch 1, dadurch gekennzeichnet, daß die Sekundärwicklungen (3, 4) durch sekundärseitige Anzapfungen (11, 12) ersetzt sind (Fig. 4).

5. Schaltungsanordnung nach Anspruch 1 oder einen der folgenden, dadurch gekennzeichnet, daß mehr als zwei Sättigungsdrosselspulen in Reihe geschaltet sind (Fig. 5).

6. Thyristorgestellte Schaltungsanordnung zur schnellen Blindleistungskompensation, dadurch gekennzeichnet,

— daß eine Sättigungsdrosselspule (15) mit zusätzlicher Sekundärwicklung (16) auf einem Spalteisenkern (18) angeordnet ist,

— daß die Sekundärwicklung mit einer Kondensator- oder Filterbatterie (5) belastet ist

— und daß die Steuerung des kapazitiven Laststromes durch einen Thyristorsteller (6, 7) möglich ist, der parallel zu einer Tertiärwicklung (17) liegt, die nur einen Teil des Spalteisenkernes umfaßt (Fig. 6).

**Claims**

1. Thyristor controlled arrangement for static VAR compensation, characterized through the fact,

— that two saturated reactors (1, 2), formed an inductive voltage divider, have series connected secondary windings (3, 4)

— that the secondary windings are connected to a capacitor or filter (5)

— and that the capacitive load current can be controlled by a thyristor arrangement (6, 7), lying in parallel to one saturated reactor (2).

2. Arrangement as in claim 1, characterized through the fact, that the thyristor arrangement (6, 7) is connected at the secondary side of one saturated reactor (2) (fig. 2).

3. Arrangement as in claim 1 or 2, characterized through the fact, that the thyristor arrangement (6, 7) is connected to a tertiary winding (10) of one saturated reactor (2) (fig. 3).

4. Arrangement as in claim 1, characterized through the fact, that the secondary windings (3, 4) are substituted by autotransformer windings (11, 12) (fig. 4).

5. Arrangement as in claim 1 or 2 or 3 or 4, characterized through the fact, that more than two saturated reactors are connected in series (fig. 5).

6. Thyristor controlled arrangement for static VAR compensation, characterized through the fact,

— that a saturated reactor (15) with secondary winding (16) has a split-core (18)

— that the secondary winding is connected to a capacitor of filter (5)

— and that the capacitive load current can be controlled by a thyristor arrangement (6, 7), lying in parallel to a tertiary winding (17), which surrounded only one part of the split-core (fig. 6).

**Revendications**

1. Disposition de circuit à régulateur à thyristor pour la compensation rapide de la puissance apparente, caractérisée

— par deux bobines à saturation (1, 2), formant un diviseur de tension inductif, pourvues de plu sieurs bobinages secondaires (3, 4) montés en série,

— par les bobinages secondaires chargés d'une batterie de condensateurs ou de filtres (5),

— par la possibilité d'une commande du courant de charge capacitif par un régulateur à thyristor (6, 7), disposé en parallèle à une bobine à saturation (2).

2. Disposition de circuit selon la revendication 1, caractérisée

— par le régulateur à thyristor (6, 7) disposé sur le secondaire d'une des bobines à saturation (2), (fig. 2).

3. Disposition de circuit selon les revendications 1 et 2, caractérisée

— par le régulateur à thyristor (6, 7) d'un bobinage tertiaire (10) adjoint à l'une des bobines à saturation 2 (fig. 3).

4. Disposition de circuit selon la revendication 1, caractérisée

— par les bobinages secondaires (3, 4) remplacés par des prises (11, 12) au secondaire (fig. 4).

5. Disposition de circuit selon les revendications 1 et 2, caractérisée

— par plus de deux bobines à saturation disposées en série (fig. 5).

6. Disposition de circuit à régulateur à thyristor pour la compensation rapide de la puissance apparente, caractérisée

— par une bobine à saturation (15), à bobinage secondaire (16) supplémentaire disposé sur un noyau de fer fendu (18);

— par le bobinage secondaire chargé d'une batterie de condensateurs ou de filtres (5)

— et par le fait que la commande du courant de charge capacitif est possible par un régulateur à thyristor (6, 7) monté en parallèle à un bobinage tertiaire (17) n'entourant qu'une partie du noyau de fer fendu (fig. 6).

Fig. 1

Fig. 2

Fig. 3

Fig. 4

Fig. 5

Fig. 6